Europäisches Patentamt

European Patent Office

Office européen des brevets

(11) Veröffentlichungsnummer: **0 127 747**
A1

(12) # EUROPÄISCHE PATENTANMELDUNG

(21) Anmeldenummer: 84103863.1

(22) Anmeldetag: 16.02.82

(51) Int. Cl.³: **A 01 D 43/10**
**A 01 F 29/20**

(30) Priorität: 17.02.81 US 235314

(43) Veröffentlichungstag der Anmeldung:
12.12.84 Patentblatt 84/50

(84) Benannte Vertragsstaaten:
DE FR GB IT NL

(60) Veröffentlichungsnummer der früheren
Anmeldung nach Art. 76 EPÜ: **0 058 431**

(71) Anmelder: DEERE & COMPANY
1 John Deere Road
Moline Illinois 61265(US)

(72) Erfinder: de Buhr, Harold Eugene
3 Carter Court Lane
Ottumwa Iowa 52501(US)

(72) Erfinder: Booker, Walter Woodrow
305 S. Milner
Ottumwa Iowa 52501(US)

(72) Erfinder: Schmid, Steven Lawrence
R. R. 1
Agency Iowa 52530(US)

(74) Vertreter: Feldmann, Bernhard et al,
DEERE & COMPANY European Office, Patent
Department Steubenstrasse 36-42 Postfach 503
D-6800 Mannheim 1(DE)

(54) Futtererntemaschine.

(57) Futtererntemaschine mit einer Zerkleinerungseinrichtung (32, 34) und einem aus zwei angetriebenen Walzen (42) bestehenden Körnerprozessor, wobei die Zerkleinerungseinrichtung (32, 34) und der Einlaßspalt der Walzen (42) des Körnerprozessors in unterschiedlichen Vertikalebenen und die Walzen (42) derart hinter der Zerkleinerungseinrichtung (32, 34) angeordnet sind, daß das von der Zerkleinerungseinrichtung kommende Gut direkt in den Einlaufspalt zwischen den Walzen gefördert wird.

FIG. 3

EP 0 127 747 A1

## Futtererntemaschine

Die Erfindung bezieht sich auf eine Futtererntemaschine mit einer Zerkleinerungseinrichtung und einem aus zwei angetriebenen Walzen bestehenden Körnerprozessor, wobei die Zerkleinerungseinrichtung und der Einlaßspalt der Walzen des Körnerprozessors in unterschiedlichen Vertikalebenen angeordnet sind.

Der Maisanbau und vor allem der Silomais weitet sich immer stärker aus, was nicht zuletzt auf die Zuchterfolge der vergangenen Jahre und auf die vielseitigen Einsatzmöglichkeiten des Maises in der Viehfütterung zurückzuführen ist. Hierbei wird der Futterwert des Silomais in entscheidendem Maße vom Kolbenanteil bestimmt, und für die Nährstoffversorgung des Viehs ist die richtige Häcksellänge und besonders das Anschlagen aller Körner von Wichtigkeit, denn nur beim Anschlagen aller Körner können alle Nährstoffe aus den Körnern gewonnen werden.

In den vergangenen Jahren hat diese Forderung dazu geführt, immer kürzer zu häckseln und zusätzlich Reibeinrichtungen in den Futtererntemaschinen oder Feldhäckslern einzubauen, denn nur dadurch konnte sichergestellt werden, daß jedes Korn angeschlagen wurde. Hierdurch wurde aber die Leistungsfähigkeit verringert.

Zunächst wurde deshalb vorgeschlagen (US-A1-3 349 823) am Ende eines Maispflückers eine aus Zerkleinerungseinrichtung und Körnerprozessor bestehende Einheit anzubauen. Hierbei wurden die gepflückten Maiskolben in der Zerkleinerungseinheit durch ein Lochsieb gerieben,

- 2 -                    0127747

und die durch das Lochsieb austretenden Stücke fielen
in den Körnerprozessor, der unterhalb der Zerkleinerungseinrichtung angeordnet war.

Bei der Futtererntemaschine (DE-A1-3 000 946), von der
die Erfindung ausgeht, wurde der Körnerprozessor bereits in einen fahrbaren Feldhäcksler integriert, allerdings derart, daß das von der Zerkleinerungseinrichtung
kommende Gut zunächst in eine Elevatorschnecke gelangte
und an deren Antrittsende aufgrund der Schwerkraft in
den Einlaufspalt des Körnerprozessors gelangte. Von
dort fiel das Gut nach unten in eine Forderschnecke
und wurde zur Abgabeeinrichtung gefördert. Hierdurch
wird das Gut auf seinem Wege zur Abgabeeinrichtung mehrmals umgelenkt und zusätzliche Fördermittel, die einen
erhöhten Energieaufwand bedeuten, sind erforderlich.

Die mit der Erfindung zu lösende Aufgabe wird darin
gesehen, den Körnerprozessor derart auszubilden und
anzuordnen, daß der Gesamtenergiebedarf der Futtererntemaschine relativ gering ist.

Diese Aufgabe ist nach der Erfindung dadurch gelöst
worden, daß die Walzen des Körnerprozessors derart
hinter der Zerkleinerungseinrichtung angeordnet sind,
daß das von der Zerkleinerungseinrichtung kommende Gut
direkt in den Einlaufspalt zwischen den Walzen gefördert wird.

Auf diese Weise wird die Wurfwirkung der Zerkleinerungseinrichtung derart genutzt, daß die Walzen das
Erntegut direkt von der Zerkleinerungseinrichtung
aufnehmen können, ohne daß zusätzliche Förderelemente
erforderlich wären.

Ein besonders leichter Übergang von Zerkleinerungseinrichtung zum Körnerprozessor wird bei einer Zerkleinerungseinrichtung mit einer umlaufenden Messertrommel und zur Messertrommel parallel angeordneten Walzen erreicht, wenn nach der Erfindung die Umfangsgeschwindigkeit mindestens einer Walze der der Messertrommel zumindest in etwa entspricht.

Die Abhängigkeit der Walzengeschwindigkeit von der der Messertrommel läßt sich in einfacher Weise dadurch herstellen, daß mindestens eine der Walzen von der Messertrommel aus antreibbar ist.

Vorteilhaft ist, daß der Einlaufspalt der Walzen tangential oder etwa tangential zur Messertrommel ausgerichtet ist.

Bei einer Futtererntemaschine, bei der die Umfangsgeschwindigkeit der Walzen des Körnerprozessors unterschiedlich ist, kann nach der Erfindung die Umfangsgeschwindigkeit der langsamer laufenden Walze der der Messertrommel zumindest in etwa entsprechen. Dadurch wird der Gutstrom im Sinne einer Beschleunigung auseinandergerissen, die Körner werden vollständig angebrochen und das Gut wird in einem Bogen geworfen.

Dadurch, daß die Walzen im wesentlichen übereinander angeordnet sind, kann der Körnerprozessor das von der Zerkleinerungseinrichtung kommende Gut leicht aufnehmen. Zweckmäßig sind dabei die vertikalen Längsmittelebenen der Walzen relativ dicht nebeneinanderliegend angeordnet, wobei die obere Walze mit Bezug auf die Richtung des Gutflusses und mit Bezug auf die untere Walze stromabwärts angeordnet ist.

- 4 -

0127747

Nach einem weiteren erfindungsgemäßen Vorschlag kann der Durchmesser mindestens einer der Walzen ein Drittel oder etwa ein Drittel des Durchmessers der Messertrommel betragen.

Nach der Erfindung kann die Drehachse der tieferliegenden Walze unterhalb der Peripherie der Messertrommel angeordnet sein.

Ein weiteres erfindungsgemäßes Merkmal sieht vor, daß die Walzen derart angeordnet sind, daß sie das Gut in einen weiteren Förderer werfen. Auf diese Weise wird die dem Gut durch die rotierenden Walzen erteilte Energie zur weiteren Förderung zweckmäßig ausgenutzt. Dieser weitere Förderer kann als Schneckenförderer ausgebildet sein.

Damit bei sich eventuell im Gutstrom befindlichen Fremdkörpern eine Beschädigung der Walzen vermieden werden kann, ist nach der Erfindung zumindest eine der Walzen federelastisch angeordnet.

Vorteilhaft kann die obere Walze unmittelbar hinter einem rückwärtigen Bereich der Messertrommel und die tieferliegende Walze gegenüber der oberen Walze nach vorne versetzt und unterhalb oder im wesentlichen unterhalb der Peripherie der Messertrommel angeordnet sein.

Was den weiteren Förderer anbelangt, so kann er derart angeordnet sein, daß er mit seinem vorderen Ende unter die obere Walze vorspringt und bis in unmittelbare Nähe der unteren Walze geführt ist.

Dadurch, daß der weitere Förderer von der Messertrommel aus antreibbar ist, wird erreicht, daß auch

0127747

die Fördergeschwindigkeit des weiteren Förderers von der der Umlaufgeschwindigkeit der Messertrommel abhängt.

Erfindungsgemäß kann die untere Walze mit einer Drehzahl umlaufen, die größer ist, als die der oberen Walze.

Weitere erfindungsgemäße Merkmale sind Gegenstand der übrigen Unteransprüche.

Die Erfindung wird nachfolgend anhand schematischer Zeichnungen an einem Ausführungsbeispiel näher erläutert.

Es zeigen:

Fig. 1 eine teilweise dargestellte Futtererntemaschine nach der Erfindung.

Fig. 2 eine Teildraufsicht auf die Erntemaschine, wobei Teile in gestrichelter Linie wiedergegeben sind.

Fig. 3 in größerem Maßstabe die Zerkleinerungseinrichtung, mit Körnerprozessor und die Zuordnung der Fördereinrichtung.

Fig. 4 eine Stirnansicht der aus Druckrollen und Fördereinrichtung bestehenden Einheit und

Fig. 5 eine Seitenansicht der Einheit nach Fig. 4, bei der auch die Antriebsmittel gezeigt sind.

Die zur Erläuterung der Erfindung verwendete Ausführungsform einer Futtererntemaschine entspricht einer selbstfahrenden Erntemaschine, wie sie in der US-PS 37 01 239 gezeigt ist. Die Erfindung ist selbstverständlich gleichermaßen auf andere Futtererntemaschinen, auch auf solche anwendbar, die durch Ackerschlepper gezogen werden. In der selbstfahrenden Maschine ist ein sich von vorne nach hinten erstreckender Rahmen 10 vorgesehen, der durch vordere und rückwärtige Laufräder 12 und 14 unterstützt ist. Diese werden durch einen Antriebsmotor, z.B. eine Brennkraftmaschine 16, angetrieben. Im dargestellten Fall sind beide Achsen durch hydraulische Einrichtungen 18, 20 und 22 und ein Wechselgetriebe 24 für die Vorderräder angetrieben. Hierbei handelt es sich um Einrichtungen, die es in vielen verschiedenen Ausführungsformen gibt und die nicht Teil der vorliegenden Erfindung sind und daher nicht näher beschrieben werden. Bei einer vom Ackerschlepper gezogenen Erntemaschine umfaßt die Kraftquelle ein Getriebe auf dem Rahmen der Erntemaschine, dem die Antriebskraft von der Zapfwelle des Ackerschleppers aus zugeführt wird. Auch diese Einrichtung bildet nicht Teil der vorliegenden Erfindung.

Der Rahmen 10 umfaßt einen quer verlaufenden vorderen Tragteil 26. Der hierzu gehörende vordere Bereich trägt eine das Erntegut aufnehmende Einrichtung oder einen Kopf 28, der beliebiger Art und Gestaltung sein kann. Der Erntekopf nimmt das stehende Mais vom Feld in üblicher Weise auf. Das Erntegut wird z. B. durch Zuführungsrollen 30 z.B. in Form von Halmen mit Kolben, Blättern oder dgl. nach rückwärts in Richtung auf eine mit hoher Geschwindigkeit rotierend angetriebene Zerkleinerungseinrichtung 32 gefördert. Diese zylindrische Zerkleinerungseinrichtung arbeitet typischerweise mit einem festen Messer 34 zusammen, um das Erntegut in relativ kleine Abschnitte zu zerkleinern, wie dies üblich ist. Die Zerkleinerungseinrichtung ist hier lediglich vereinfachend als Zylinder gezeigt, wobei die üblichen Messer zur Verdeutlichung weggelassen sind. Das zerkleinerte Gut wird kraftvoll nach unten und rückwärts geschleudert, wenn die Schneideinrichtung in Richtung des eingezeichneten Pfeiles rotiert.

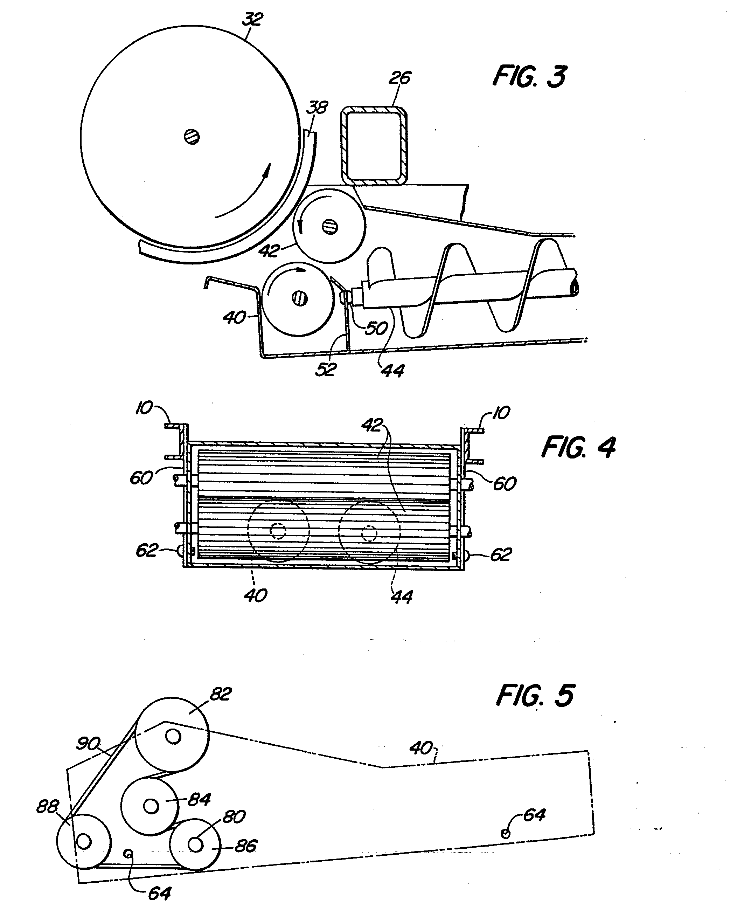

Bei einer üblichen Ausführungsform einer Erntemaschine wird das zerkleinerte Erntegut normalerweise durch einen nach rückwärts fördernden Förderer zu der Abgabeeinrichtung z.B. einem Gebläse 36 weiterbefördert, das im hinteren Teil der Maschine angeordnet ist. In einer durch einen Ackerschlepper gezogenen Maschine erstreckt sich der Förderer normalerweise quer zur Richtung der Fahrt und das Gebläse befindet sich an einer Seite der Maschine. Dies sind jedoch Einzelheiten, die im vorliegenden Zusammenhang keine besondere Bedeutung haben. Auch kann in einer typischen Futtererntemaschine zum erneuten Zerkleinern ein Sieb direkt hinter der Zerkleinerungseinrichtung in einem tiefer liegenden Teil angebracht werden. Hierbei handelt es sich normalerweise um den Quadranten zwischen der 3 Uhr-Position und der 6 Uhr-Position. Ein solches Sieb kann auch bei der Futtererntemaschine gemäß der Erfindung verwendet werden. So zeigt Fig. 3 gekrümmte Gleitführungen zur Aufnahme eines solchen Siebes bei 38. Es wird nachfolgend ersichtlich, daß die gemäß der Erfindung kombinierten Elemente auch leicht entfernt und durch übliche Mittel ersetzt werden können, worauf ein solches zur weiteren Zerkleinerung dienendes Sieb an Ort und Stelle gebracht wird, wenn dies gewünscht ist.

Eine Teilbaueinheit 40 von kastenförmiger Gestalt wird durch den Rahmen der Futtererntemaschine unterstützt und erstreckt sich von einer Stelle unmittelbar hinter und unter der Schneideinrichtung bis zu einem Bereich in der Nachbarschaft des Abgabegebläses 36. Diese Teilbaueinheit und deren Komponenten ersetzen dabei die übliche Fördereinrichtung, die sich zwischen der Schneideinrichtung und dem Gebläse erstreckt. Zu der Teilbaueinheit gehören obere und untere Druckrollen 42, die im entgegengesetzten Sinne gemäß den Pfeilen um quer verlaufende und zueinander parallele Achsen antreibbar sind, die auch parallel zur Drehachse der Schneideinrichtung angeordnet sind. Diese Druckrollen sind auf ihrer Außenfläche gewellt oder gerippt oder geriffelt, wie dies bei Walzenmühlen üblich ist. Sie laufen in unmittelbarer Nähe zueinander, so daß das Erntegut, das von der Schneideinrichtung kommt, weiter zerkleinert wird. Die Druckrollen sind dabei besonders geeignet, Körner oder dergleichen zu zerkleinern. Die Rollen sind so angeordnet, daß die obere Rolle hinter und in einem Bereich unterhalb der Drehachse der Zerkleinerungseinrichtung liegt, während die untere Rolle nach vorne und im wesentlichen nach unten gegenüber der oberen Rolle versetzt ist. Die Lage ist so gewählt, daß die Druckrollen besonders günstig das Erntegut von der Zerkleinerungseinrichtung aufnehmen, ohne daß weitere Fördereinrichtungen notwendig sind. Die Zerkleinerungseinrichtung wirft das Erntegut tangential in einer nach unten und nach rückwärts gerichteten Richtung direkt in den Einlaufspalt zwischen den Druckrollen.

Die Druckrollen 42 wiederum werfen das weiter zerkleinerte Gut hauptsächlich nach rückwärts, aber ebenfalls nach unten und zwar in den Eingangsteil der von vorne nach hinten fördernden Fördereinrichtung. Diese sind im dargestellten Beispiel durch zwei Förderschnecken 44 (Fig. 4) gebildet. Diese bewegen das zerkleinerte Gut nach rückwärts zum Gebläse 36. Die Wellen der Förderer haben eine Reihe von Paddeln 46, um das Erntegut nach der Seite in die Aufnahmeöffnung 48 des seitlichen Gebläsegehäuses zu werfen.

Die Lage der Rollen in der zuvor beschriebenen Weise, in der die untere Rolle gegenüber der oberen Rolle nach vorne und nach unten versetzt ist, ermöglicht es, daß der vordere Teil der Fördereinrichtung möglichst nahe den Rollen zu liegen kommt, und zwar in einem Bereich, wo die vorderen Enden der Förderelemente bei 50 in einer Querwand 52 der Teilbaueinheit gelagert sind. Die Förderer oder Schnecken sind kürzer als die ersetzten Fördereinrichtungen der üblichen Futtererntemaschine um einen Betrag, der notwendig ist, um die Druckrollen aufzunehmen. Dies erleichtert das Auswechseln der Teilbaueinheit gegen einen üblichen Förderer.

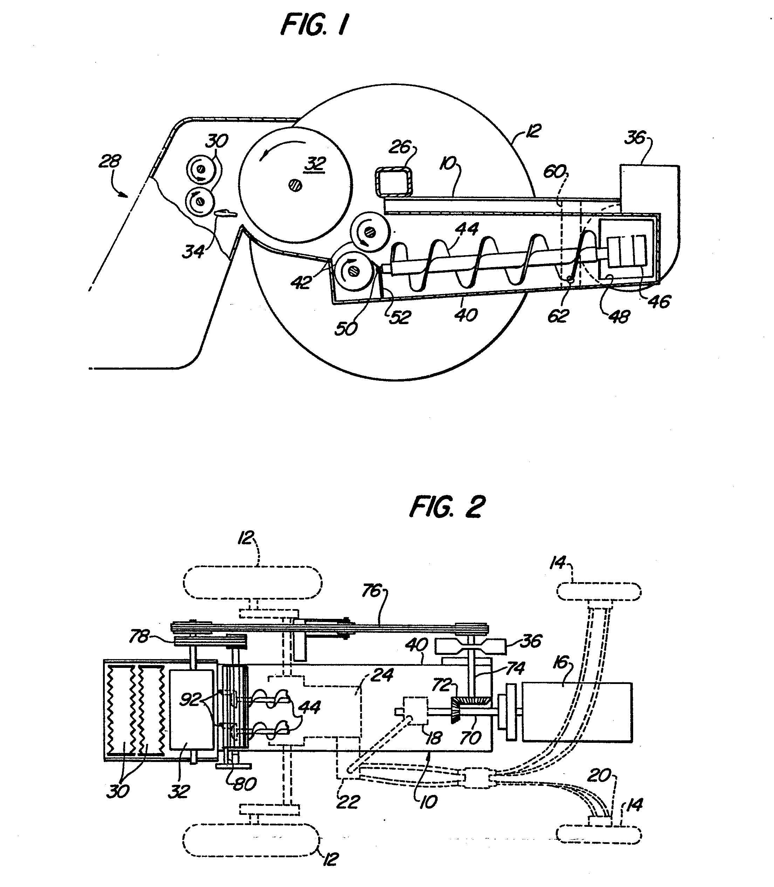

Das Montieren der kastenförmigen Teilbaueinheit 40 kann am besten aus den Fig. 1 und 4 erkannt werden. Jedes Glied des Rahmens 10 weist vordere und rückwärtige nach unten ragende Tragglieder auf. Diese erstrecken sich an der Längsseite beiderseits der Teilbaueinheit. Jedes Tragglied ist an der zugehörigen Seitenwand der Teilbaueinheit mit Hilfe von lösbaren Stiften 62 befestigt. Die zugehörigen Öffnungen in der Wand sind bei 64 in Fig. 5 zu sehen.

In einer bevorzugten Ausführungsform sind die Durchmesser der Rollen 42 so gewählt, daß sie etwa 1/3 des Durchmessers der zylinderförmigen Schneideinrichtung aufweisen. Im dargestellten Beispiel beträgt der Durchmesser der Rollen 20 cm und der der Zerkleinerungseinrichtung 60 cm. Die Drehgeschwindigkeit der unteren Rolle 42 ist größer als die der oberen Rolle, um eine Anhäufung des behandelten Erntegutes insb. von Kernen zu vermeiden. Weiterhin wurden gute Ergebnisse erhalten, wenn die Oberflächengeschwindigkeit der unteren Rolle annähernd gleich der tangentialen Geschwindigkeit der Zerkleinerungseinrichtung ist. Im dargestellten Beispiel beträgt die Rotationsgeschwindigkeit der Zerkleinerungseinrichtung etwa 850 U/min., während die langsame Rolle mit 2250 und die schnellere Rolle mit 2750 U/min. angetrieben werden. Als Beispiel dienende Antriebsmittel zur Erzielung der gezeigten Drehzahlen wird auf die Figuren 2 und 5 verwiesen. Wie aus Fig. 2 hervorgeht, weist die Antriebsmaschine 16 eine Antriebswelle 70 auf, die mit Hilfe eines Kegelrades 72 eine Querwelle 74 antreibt, auf der die Flügel des Gebläses 36 montiert sind. Ein Antriebsriemen 76 verbindet diese Welle mit der Welle der Zerkleinerungseinrichtung. Ein Flachriemen oder ein Mehrfach-V-Riemen 78 treibt die obere Druckrolle 42 an. An der entgegengesetzten Seite der Maschine ist ein Differentialantrieb vorgesehen, der die untere Rolle antreibt sowie eine Querwelle 80 für die Förderschnecken. Dieser Antrieb umfaßt eine Riemenscheibe 82 auf der Welle der oberen Rolle, eine Riemenscheibe 84 auf der Welle für die untere Druckrolle, eine Riemenscheibe 86 auf der Querwelle 80, eine leer umlaufende Riemenscheibe 88 sowie einen mehrfachen V-Riemen 90 auf, der um die Riemenscheibe in einer solchen Weise gelegt ist, daß die unteren und oberen Druckrollen in entgegengesetzten Richtungen rotieren. Ein Kegeltrieb 92 vervollständigt den Antrieb für die Schnecken 44. Die Aufsammeleinrichtung und die Zuführungsrollen 30 können in irgend einer passenden Weise angetrieben werden. Einzelheiten hierüber sind weggelassen, da sie nicht Teil der Erfindung sind.

Die untere Druckrolle kann Mittel haben, um ihre Stellung gegenüber der oberen Rolle einstellen zu können. Sie umfaßt vorzugsweise nachgiebige Mittel, so daß die Druckrollen sich auseinander bewegen können, wenn Fremdkörper vorliegen, wie dies aus Walzenmühlen bekannt ist. Die Vorteile dieser Mühlen als solche sind ebenfalls bekannt und brauchen hier nicht detailliert auseinandergesetzt zu werden. Ein Vorteil jedoch besteht darin, daß die Walzenmühle in ihrer Anordnung in einer Futtererntemaschine den Nachteil der Notwendigkeit vermeidet, zur zusätzlichen Zerkleinerung dienende Siebe oder dergleichen zu verwenden. Die Walzen sind auch wirkungsvoller als solche Siebe, wobei die Siebe das ganze Material zu kleinen Partikelchen zerkleinern. Ein anderer Vorteil besteht darin, daß die Druckrollen weniger Abrieb erzeugen, was zu Verdauungsproblemen führt und die Verwendung des Futters einschränkt. Grobe Partikelchen werden auf eßbare Größe vermindert und die Silage als Ganzes ist gleichförmiger bezüglich der Teilchenlänge, so daß eine bessere Packung in einem Silo oder dgl. erreicht wird. Die Druckrollen sind besonders vorteilhaft bei Verminderung später geernteter Maisfutterteile, bei denen die härteren Kerne bei früheren Systemen der Zer-

- 12 -

kleinerung entgegen. Dabei sorgen die Druckrollen für
eine Konsistenz des Futters, daß auch von älteren
Kühen mit abgenutzten Zähnen besser angenommen wird.

Patentansprüche

1. Futtererntemaschine mit einer Zerkleinerungseinrichtung (32, 34) und einem aus zwei angetriebenen
Walzen (42) bestehenden Körnerprozessor, wobei die
Zerkleinerungseinrichtung (32, 34) und der Einlaßspalt der Walzen (42) des Körnerprozessors in unterschiedlichen Vertikalebenen angeordnet sind, dadurch
gekennzeichnet, daß die Walzen (42) des Körnerprozessors derart hinter der Zerkleinerungseinrichtung
(32, 34) angeordnet sind, daß das von der Zerkleinerungseinrichtung kommende Gut direkt in den Einlaufspalt zwischen den Walzen gefördert wird.

2. Futtererntemaschine nach Anspruch 1, wobei die Zerkleinerungseinrichtung (32, 34) eine umlaufende
Messertrommel (32) aufweist und die Walzen (42) parallel zur Messertrommel angeordnet sind, dadurch
gekennzeichnet, daß die Umfangsgeschwindigkeit mindestens einer Walze (42) der der Messertrommel (32)
zumindest in etwa entspricht.

3. Futtererntemaschine nach Anspruch 1, dadurch gekennzeichnet, daß mindestens eine der Walzen (42) von
der Messertrommel (32) aus antreibbar ist.

4. Futtererntemaschine nach Anspruch 1, dadurch gekennzeichnet, daß der Einlaufspalt der Walzen (42) tangential oder etwa tangential zur Messertrommel (32)
ausgerichtet ist.

5. Futtererntemaschine nach Anspruch 2, mit Walzen (42),
deren Umfangsgeschwindigkeit unterschiedlich ist,
dadurch gekennzeichnet, daß die Umfangsgeschwindigkeit der langsamer laufenden Walze (42) der der
Messertrommel (32) zumindest in etwa entspricht.

- 14 -                    O127747

6. Futtererntemaschine nach Anspruch 1, dadurch gekennzeichnet, daß die Walzen (42) im wesentlichen übereinander angeordnet sind.

7. Futtererntemaschine nach Anspruch 6, dadurch gekennzeichnet, daß die vertikalen Längsmittelebenen der
Walzen (42) relativ dicht nebeneinanderliegend angeordnet sind.

8. Futtererntemaschine nach Anspruch 1, dadurch gekennzeichnet, daß die obere Walze (42) mit Bezug auf die
Richtung des Gutflusses und mit Bezug auf die untere
Walze stromabwärts angeordnet ist.

9. Futtererntemaschine nach einem oder mehreren der vorherigen Ansprüche, dadurch gekennzeichnet, daß der
Durchmesser mindestens einer der Walzen (42) ein
Drittel oder etwa ein Drittel des Durchmessers der
Messertrommel (32) beträgt.

10. Futtererntemaschine nach einem oder mehreren der vorherigen Ansprüche, dadurch gekennzeichnet, daß die
Drehachse der tieferliegenden Walze (42) unterhalb
der Peripherie der Messertrommel (32) angeordnet ist.

11. Futtererntemaschine nach einem oder mehreren der vorherigen Ansprüche, dadurch gekennzeichnet, daß die
Walzen (42) derart angeordnet sind, daß sie das Gut
in einen weiteren Förderer (44) werfen.

12. Futtererntemaschine nach Anspruch 11, dadurch
gekennzeichnet, daß der weitere Förderer (44) als
Schneckenförderer ausgebildet ist.

- 15 -

0127747

13. Futtererntemaschine nach einem oder mehreren der vorherigen Ansprüche, dadurch gekennzeichnet, daß zumindest eine der Walzen (42) federelastisch angeordnet ist.

14. Futtererntemaschine nach einem oder mehreren der vorherigen Ansprüche, dadurch gekennzeichnet, daß die obere Walze (42) unmittelbar hinter einem rückwärtigen Bereich der Messertrommel (32) und die tieferliegende Walze (42) gegenüber der oberen Walze nach vorne versetzt und unterhalb oder im wesentlichen unterhalb der Peripherie der Messertrommel angeordnet ist.

15. Futtererntemaschine nach einem oder mehreren der vorherigen Ansprüche, dadurch gekennzeichnet, daß der weitere Förderer (44) mit seinem vorderen Ende unter die obere Walze (42) vorspringt und bis in unmittelbare Nähe der unteren Walze geführt ist.

16. Futtererntemaschine nach einem oder mehreren der vorherigen Ansprüche, dadurch gekennzeichnet, daß der weitere Förderer (44) von der Messertrommel (32) aus antreibbar ist.

17. Futtererntemaschine nach einem oder mehreren der vorherigen Ansprüche, dadurch gekennzeichnet, daß die untere Walze (42) mit einer Drehzahl umläuft, die größer ist als die der oberen Walze (42).

18. Walzenpaar zur Bearbeitung von Körnern für eine Futtererntemaschine, dadurch gekennzeichnet, daß die Walzen (42) in einer Teilbaueinheit (40) im wesentlichen übereinanderliegend angeordnet sind.

19. Körnerbearbeitungseinheit zum Einbau in eine Futtererntemaschine mit einer Messertrommel (32), wobei die Körnerbearbeitungseinheit zwei antreibbare Walzen (42) aufweist, dadurch gekennzeichnet, daß die Körnerbearbeitungseinheit unmittelbar hinter der Messertrommel (32) einsetzbar ist und Antriebsmittel für die Walzen aufweist.

20. Körnerbearbeitungseinheit nach Anspruch 19, dadurch gekennzeichnet, daß die Antriebsmittel mit den Antriebsmitteln für die Messertrommel (32) verbindbar sind.

FIG. 1

FIG. 2

*32*

*38*

*26*

FIG. 3

*42*

*40*

*50*

*52*   *44*

*10*                                    *10*

*42*

*60*                                    *60*

FIG. 4

*62*                                    *62*

*40*            *44*

FIG. 5

*82*

*90*                               *40*

*88*   *84*

*80*           *64*

*86*

*64*

**Europäisches Patentamt**

# EUROPÄISCHER RECHERCHENBERICHT

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| D,A | DE-A-3 000 946  (P. REVERE CORP.)<br><br>* Seite 6, Zeile 29 - Seite 8, Zeile 27; Figuren 1, 2 * | 1,5,11 ,12,15 ,19 | A 01 D  43/10<br>A 01 F  29/20 |
| A | DE-A-2 443 780  (E. PECIS)<br><br>* Seite 4, Zeile 18 - Seite 6, Zeile 24; Figuren 1-3 * | 1,3,11 ,12,15 ,16,19 ,20 | |
| D,A | US-A-3 349 823  (T. STOTT et al.)<br><br>* Spalte 2, Zeile 11 - Spalte 3, Zeile 52; Figuren 1, 2 * | 1,3,5, 11,12, 15,16, 19,20 | |

RECHERCHIERTE SACHGEBIETE (Int. Cl. ³)

A 01 D   43/00
A 01 D   45/02
A 01 F   29/00
B 02 C   18/00

Der vorliegende Recherchenbericht wurde für alle Patentansprüche erstellt.

| Recherchenort | Abschlußdatum der Recherche | Prüfer |
|---|---|---|
| BERLIN | 27-07-1984 | BERGZOLL M C |

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503. 03.82